(19) **Europäisches Patentamt** / **European Patent Office** / **Office européen des brevets**

(11) **EP 3 796 195 B1**

(12) **EUROPEAN PATENT SPECIFICATION**

(45) Date of publication and mention
of the grant of the patent:
**09.11.2022  Bulletin 2022/45**

(21) Application number: **19804554.4**

(22) Date of filing: **06.03.2019**

(51) International Patent Classification (IPC):
**H04L 12/40** *(2006.01)*    **G06F 21/55** *(2013.01)*
**H04L 9/40** *(2022.01)*    **G06F 21/60** *(2013.01)*

(52) Cooperative Patent Classification (CPC):
**G06F 21/606; G06F 21/554; H04L 12/40013;**
**H04L 63/1416;** H04L 2012/40273

(86) International application number:
**PCT/JP2019/008746**

(87) International publication number:
**WO 2019/220746 (21.11.2019 Gazette 2019/47)**

(54) **ABNORMALITY DETECTION DEVICE AND ABNORMALITY DETECTION METHOD**

ANOMALIEDETEKTIONSVORRICHTUNG UND ANOMALIEDETEKTIONSVERFAHREN

DISPOSITIF DE DÉTECTION D'ANOMALIES ET PROCÉDÉ DE DÉTECTION D'ANOMALIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **17.05.2018   JP 2018095688**

(43) Date of publication of application:
**24.03.2021   Bulletin 2021/12**

(73) Proprietor: **OMRON Corporation
Shiokoji-dori, Shimogyo-ku,
Kyoto-shi
Kyoto 600-8530 (JP)**

(72) Inventors:
• **YAMAMOTO, Taisei
  Kyoto-shi, Kyoto 600-8530 (JP)**
• **HIROBE, Naoki
  Kyoto-shi, Kyoto 600-8530 (JP)**
• **WATANABE, Yasuhisa
  Kyoto-shi, Kyoto 600-8530 (JP)**

(74) Representative: **HGF
HGF Limited
1 City Walk
Leeds LS11 9DX (GB)**

(56) References cited:
**WO-A1-2016/116973     WO-A1-2017/061079
JP-A- 2008 211 644     JP-A- 2017 050 841
JP-A- 2017 085 197**

**Description**

TECHNICAL FIELD

The present disclosure relates to an apparatus and a method for detecting a cyber attack on equipment connected to a network.

BACKGROUND ART

For a vehicle, an ECU that electronically controls not only an engine or a brake but also a plurality of pieces of equipment is connected to an in-vehicle network, and the in-vehicle network is connected to an external network.
In recent years, development of autonomous driving technology for vehicle has been progressed. In such circumstances, that there is growing importance of electronic control of each equipment in a vehicle with the progress of the autonomous driving technology for vehicle, rapid detection of and response to an external cyber attack on equipment connected to an in-vehicle network is an important issue.
Therefore, various techniques have been developed to detect cyber attacks on in-vehicle networks. For example, Patent Documents 1 and 2 disclose techniques for performing a cyber attack (detection of fraud) by comparing a data reception interval with a predetermined cycle.

PRIOR ART DOCUMENT

PATENT DOCUMENTS

[Patent Document 1] International publication No. WO2014/115455A1
[Patent Document 2] Japanese Patent Laid-open Publication No. JP2017-73765A Other relevant prior art documents: WO 2016/116973 and JP2017-050841.

SUMMARY OF THE INVENTION

PROBLEMS TO BE SOLVED BY THE INVENTION

The present invention provides an abnormality detection apparatus and an abnormality detection method for detecting a cyber attack on equipment connected to a network such as an in-vehicle network.

MEANS FOR SOLVING THE PROBLEMS

According to the first aspect of the present invention, there is provided an abnormality detection apparatus connected to a bus through which a data frame is transmitted at a predetermined cycle. The abnormality detection apparatus detects an attack on equipment connected to the bus, and includes a frame reception unit that receives a data frame transmitted through the bus, and an attack detection unit. The attack detection unit determines whether or not a reception cycle of a check target data frame is within a normal range by using a threshold indicating a normal range, and that detects presence or absence of an attack based on a determination result. The abnormality detection apparatus further includes a bus load calculation unit_that calculates a bus load value indicating a congestion degree in the bus based on contents of the data frame that the frame reception unit receives, and includes a reception cycle threshold calculation unit. The reception cycle threshold calculation unit decides the threshold according to the bus load value that the bus load calculation unit calculates.
According to the second aspect of the present invention, there is provided an abnormality detection method of detecting an attack on equipment connected to the bus, through which a data frame is transmitted at a predetermined cycle. The method including steps of:

receiving the data frame;
calculating a bus load value indicating a congestion degree in the bus based on contents of the received data frame;
deciding a threshold of a normal range of a reception cycle of a data frame based on the calculated bus load value;
determining whether or not a reception cycle of a check target data frame is within a normal range by using the decided threshold; and
detecting presence or absence of an attack based on a determination result.

According to the third aspect of the present invention, there is provided a program for controlling an abnormality detection apparatus connected to a bus through which a data frame is transmitted at a predetermined cycle. The abnormality detection apparatus detecting an attack on equipment connected to the bus, and the program controls a control unit of the abnormality detection apparatus to execute the steps of:

receiving the data frame;
calculating a bus load value indicating a congestion degree in the bus based on contents of the received data frame;
deciding a threshold of a normal range of a reception cycle of a data frame based on the calculated bus load value;
determining whether or not a reception cycle of a check target data frame is within a normal range by using the decided threshold; and
detecting presence or absence of an attack based on a determination result.

EFFECT OF THE INVENTION

According to the present invention, the threshold for determining the reception cycle is changed according to a congestion degree in the bus. Therefore, it is possible to prevent false detection of a normal frame as an attack frame when a data frame is delayed due to congestion or busy in the bus, while it is possible to detect the attack frame accurately when the bus is not congested or busy.

BRIEF DESCRIPTION OF THE DRAWINGS

Fig. 1 is a diagram illustrating an application example of an abnormality detection apparatus according to the present disclosure, including application to a network in a vehicle.
Fig. 2 is a diagram illustrating a hardware configuration of a gateway apparatus.
Fig. 3 is a diagram illustrating a functional configuration of the gateway apparatus.
Fig. 4 is a diagram illustrating a configuration of data frames transmitted in a controller area network (CAN) network.
Fig. 5A is a diagram illustrating various kinds of data referred to under the control of the gateway apparatus, showing a frame information table.
Fig. 5B is a diagram illustrating various kinds of data referred to under the control of the gateway apparatus, showing a bit count table.
Fig. 5C is a diagram illustrating various kinds of data referred to under the control of the gateway apparatus, showing a cycle threshold table.
Fig. 6 is a diagram for describing an attack detection operation by a gateway apparatus according to a first embodiment.
Fig. 7 is a flowchart illustrating an attack detection operation by the gateway apparatus according to the first embodiment.
Fig. 8 is a diagram for describing a method for calculating a sum total of received bits per unit time.
Fig. 9 is a diagram for describing an expected reception time range.
Fig. 10 is a diagram for describing an attack detection operation by a gateway apparatus according to a second embodiment.
Fig. 11 is a first flowchart illustrating an attack detection operation by the gateway apparatus according to the second embodiment.
Fig. 12 is a second flowchart illustrating an attack detection operation by the gateway apparatus according to the second embodiment.

MODES FOR CARRYING OUT THE INVENTION

Embodiments of an abnormality detection apparatus for network according to the present invention will be described in detail below with reference to the drawings as appropriate.

APPLICATION EXAMPLE

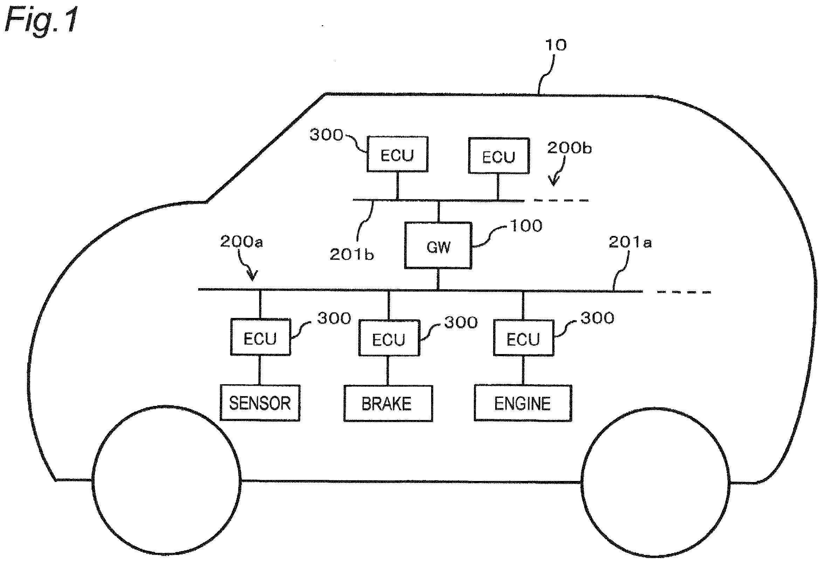

The abnormality detection apparatus according to the present disclosure is an apparatus that detects an attack (for example, DoS attack) on equipment connected to a network. Fig. 1 is a diagram illustrating an example in which an abnormality detection apparatus according to the present disclosure is applied to a network in a vehicle. As illustrated in Fig. 1, in-vehicle networks 200a and 200b are provided in a vehicle 10. The in-vehicle network 200a and the in-vehicle network 200b are connected by a gateway apparatus 100. The in-vehicle network 200a includes a bus 201a and a plurality of electronic control units (ECUs) 300 connected to the bus 201a. The in-vehicle network 200b includes a bus 201b and a plurality of ECUs 300 connected to the bus 201b. An ECU 300 is an apparatus that electronically controls equipment connected to the ECU 300 or collects information from the equipment. The ECU 300 is connected to, for example, an engine, a brake, an actuator for power window, a sensor of various kinds, or the like. It should be noted that, for convenience of description, the in-vehicle network 200a and the in-vehicle network 200b may be collectively referred to as an "in-vehicle network 200" hereinafter. In addition, the bus 201a and the bus 201b may be collectively referred to as a "bus 201".

The gateway apparatus 100 has a function to detect a cyber attack on the ECU 300 of the vehicle 10, and operates as an abnormality detection apparatus. When the gateway apparatus 100 detects an attack, the gateway apparatus 100 notifies a driver, an owner of the vehicle, a predetermined institution, and an ECU that an attack has been received. For example, the ECU controls the engine or the brake according to this notification to ensure safety.

FIRST EMBODIMENT

The configuration and operation of a gateway apparatus that is an embodiment of an abnormality detection apparatus according to the present disclosure will be described below.

1. CONFIGURATION OF GATEWAY APPARATUS

As illustrated in Fig. 1, the gateway apparatus 100 according to a first embodiment is connected to the in-vehicle network 200 and has a function to detect an attack on the network 200. The gateway apparatus 100 detects an attack based on a reception cycle of a data frame periodically transmitted through the network 200.

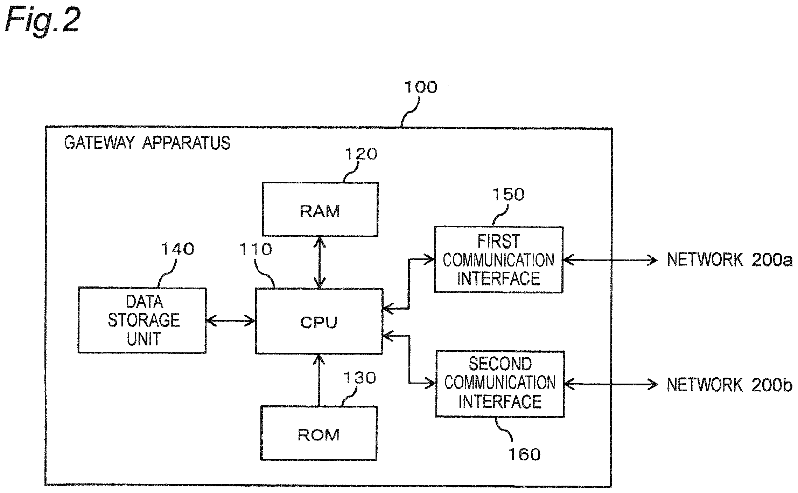

Fig. 2 is a diagram illustrating a hardware configuration of the gateway apparatus 100. As illustrated in Fig. 2, the gateway apparatus 100 includes a CPU (control unit) 110, and implements a predetermined function by executing a predetermined program. Instead of the CPU 110, another type of general-purpose processor, MPU for example, may be used. Alternatively, instead of the CPU 110, a processor specially designed to implement a predetermined function may be used. That is, the gateway apparatus 100 can include a processor of various kinds, such as a CPU, an MPU, a GPU, a DSP, an FPGA, or an ASIC.

Further, the gateway apparatus 100 includes a RAM 120, a ROM 130, and a data storage unit 140. The RAM 120 is a memory that temporarily stores information and a program, which are required for the CPU 110 to execute calculation, and is a work area accessed by the CPU 110 as appropriate. The ROM 130 is a memory for storing a program executed by the CPU 110. It should be noted that a program executed by the CPU 110 may be downloaded from a server via a communication line, or may be provided to the gateway apparatus 100 via an internal recording medium on a printed board, such as a non-volatile memory, or via an external recording medium, such as an optical disk or a memory card.

The data storage unit 140 is a recording medium that records various kinds of information referred to under the control of the gateway apparatus 100. The data storage unit 140 can include, for example, an internal recording medium, such as a non-volatile memory, or an external recording medium, such as a hard disk (HDD), a solid-state drive (SSD), or an optical disk apparatus.

Further, the gateway apparatus 100 includes a first communication interface 150 and a second communication interface 160. The first communication interface 150 is a communication circuit or communication module for exchanging data with an ECU connected to the in-vehicle network 200a. The second communication interface 160 is a communication circuit or communication module for exchanging data with an ECU connected to the in-vehicle network 200b. In the present embodiment, the first communication interface 150 to the second communication interface 160 perform communication according to a controller area network (CAN) protocol widely used for an in-vehicle network. It should be noted that the first communication interface 150 to the second communication interface 160 may perform communication according to a protocol other than the CAN protocol. For example, the communication may be performed according to a CAN FD protocol.

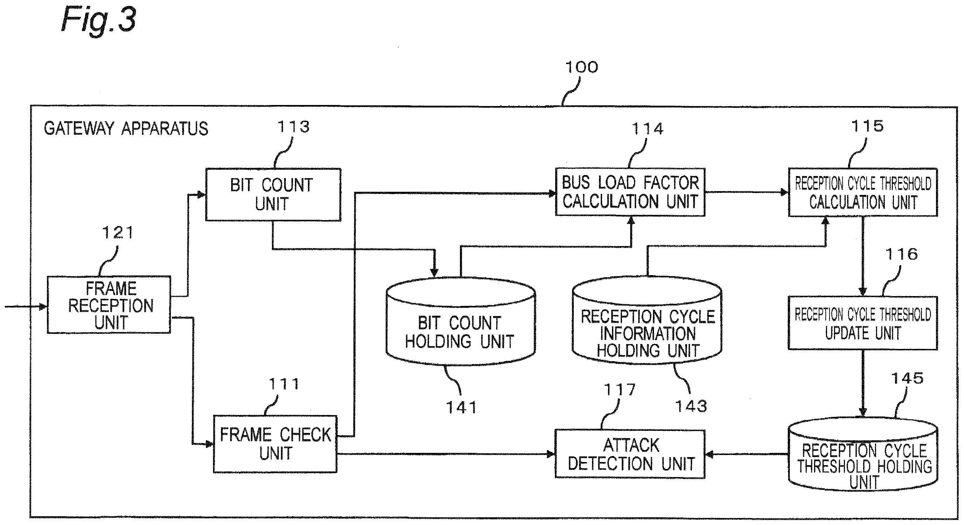

Fig. 3 is a diagram illustrating a functional configuration of the gateway apparatus 100. Each of the functions illustrated in Fig. 3 is implemented by the CPU 110 executing a predetermined program.

The gateway apparatus 100 includes a frame reception unit 121, a frame check unit 111, a bit count unit 113, a bus load factor calculation unit 114, a reception cycle threshold calculation unit 115, a reception cycle threshold update unit 116, and an attack detection unit 117. Further, the gateway apparatus 100 includes a bit count holding unit 141, a reception cycle information holding unit 143, and a reception cycle threshold holding unit 145.

The frame reception unit 121 receives the data frames transmitted through the in-vehicle network 200. The frame reception unit 121 includes the first communication interface 150 and/or the second communication interface 160.

The frame check unit 111 checks whether or not the received data frame is a check target based on a CAN ID of the received data frame. In the present embodiment, the data frame periodically transmitted is a target frame to be checked for cyber attack detection.

The bit count unit 113 counts the entire length of the check target data frame, that is, the number of bits of the check target data frame.

The bus load factor calculation unit 114 calculates a bus load factor as an example of a bus load value that is an index indicating a congestion degree of data transmitted through the bus 201 of the in-vehicle network 200. The bus load factor can be also said to be a value indicating a magnitude of load on the in-vehicle network 200. The details of a method for calculating the bus load factor will be described later.

The reception cycle threshold calculation unit 115 calculates a threshold for a normal cycle range, which is a determination criterion when detecting presence or absence of a cyber attack. Specifically, the reception cycle threshold calculation unit 115 calculates the width of the normal cycle range indicating a range of a normal reception cycle of the data frame.

The reception cycle threshold update unit 116 updates the threshold (width) of the normal cycle range based on the bus load factor.

The attack detection unit 117 detects presence or absence of a cyber attack based on the reception cycle of the data frame, with reference to the normal cycle range.

The frame check unit 111, the bit count unit 113, the bus load factor calculation unit 114, the reception cycle threshold calculation unit 115, the reception cycle threshold update unit 116, and the attack detection unit 117 are implemented by the CPU 110 executing a program.

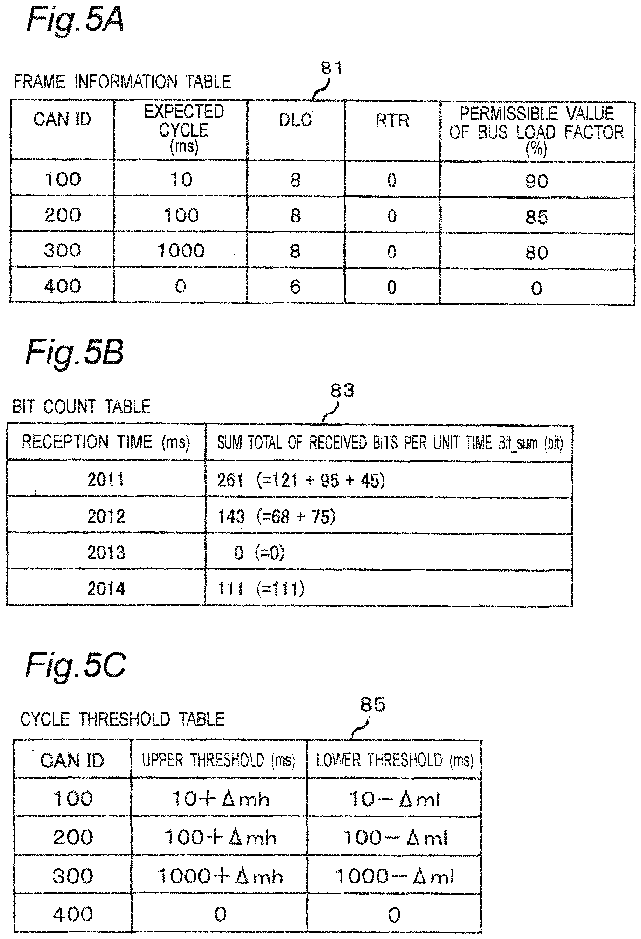

The bit count holding unit 141, the reception cycle information holding unit 143, and the reception cycle threshold holding unit 145 include a data storage unit 140. The details of the information to be held in each of the holding units 141, 143, and 145 will be described later with reference to Figs. 5A to 5C.

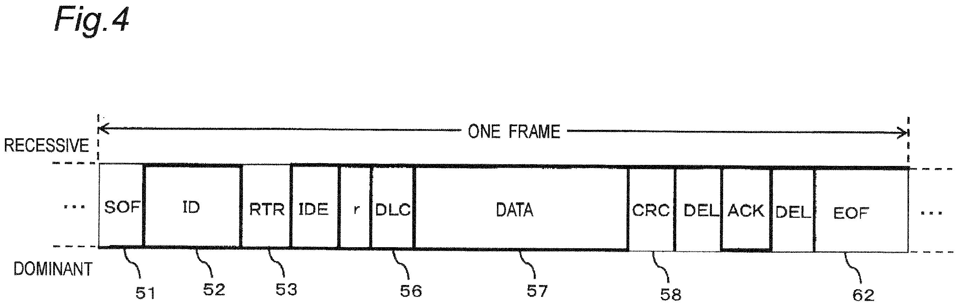

In the in-vehicle networks 200a and 200b, respective apparatuses communicate with each other in conformity with a CAN protocol. Fig. 4 is a diagram illustrating a configuration of the data frame defined in the CAN protocol (hereinafter, referred to as a "CAN frame"). The CAN frame starts at Start of Frame (SOF) 51, and ends at End of Frame (EOF) 62. Further, the CAN frame includes a field 52 for storing an ID identifying the type of the frame, an RTR 53, a DLC 56, and a field 57 for storing data. The remote transmission request (RTR) 53 stores a value for distinguishing the data frame from a remote frame. The data length code (DLC) 56 stores a value indicating the length of the data field 57.

Figs. 5A to 5C are diagrams illustrating various kinds of table information referred to under the control of the gateway apparatus 100.

(1) FRAME INFORMATION TABLE

Fig. 5A is a diagram describing an example of a configuration of a frame information table 81 for storing information about various kinds of data frames. The frame information table 81 manages an expected cycle of the data frame, a DLC, an RTR, and a permissible value of the bus load factor. The frame information table 81 is stored in the reception cycle information holding unit 143.

The DLC and the RTR are defined by the CAN protocol for each type of the data frames. In addition, in the CAN protocol, the transmission cycle is defined for each type of the data frames. That is, the data frame is expected to be received at a reception cycle (expected cycle) corresponding to a transmission cycle, previously defined for each type of frame (that is, for each CAN ID). Thus, in the frame information table 81, the expected reception cycle (expected cycle) of the data frame is managed for each CAN ID.

The expected cycle of "0" means that the data frame is an aperiodically transmitted frame. The gateway apparatus 100 according to the present embodiment excludes such an aperiodically transmitted (received) data frame from check targets of attack detection not to inspect the same data frame, while the gateway apparatus 100 includes a periodically transmitted (received) data frame in check targets of attack detection to inspect the same data frame.

In addition, in the CAN protocol, the value of the CAN ID indicates priority in the data frame transmission control. That is, the smaller value of the CAN ID the data frame has the higher transmission priority the data frame has. When a bus is congested or busy, the data frames are transmitted in a descending order of the priority.

The permissible value of the bus load factor is information referred to in attack detection processing, and is preset for each CAN ID of the data frames (details will be described later). The permissible value of the bus load factor is set for each type of the data frames (for each CAN ID).

(2) BIT COUNTR TABLE

Fig. 5B is a bit count table 83 for managing a sum total of bits of the data frames received at each predetermined reception time. The reception time is measured at a predetermined timing (for example, when the CPU (control unit) 110 is activated) as the reference time. The bit count table 83 is stored in the bit count holding unit 141. For example, in an example of Fig. 5B, three data frames are received at the time 2011, the numbers of bits of each of the data frames are 121, 95, and 45 bits, and then, 261 bits is recorded in the bit count table 83, as the sum total of received bits.

### (3) CYCLE THRESHOLD TABLE

Fig. 5C is a cycle threshold table 85 for managing threshold information for defining the normal cycle range with respect to the data frames of each CAN ID. The normal cycle range is defined as a range of the reception cycle determined to be normal reception. The cycle threshold table 85 is stored in the reception cycle threshold holding unit 145.

In the present embodiment, upper and lower threshold widths, which are upper and lower margins of the cycle, are managed as threshold information for defining the normal cycle range. That is, the normal cycle range is set to a range having margins on upper and lower sides with the upper and lower threshold widths, respectively, which are to be added to an expected cycle T of the reference previously defined for each frame. Specifically, assuming that the upper threshold width is $\Delta mh$ and the lower threshold width is $\Delta ml$, the normal cycle range W is expressed by the following equation:

$$T - \Delta ml \leq \text{normal cycle range } W \leq T + \Delta mh \qquad (1)$$

The cycle threshold table 85 manages the upper threshold and the lower threshold of the data frame for each type of the data frames, that is, for each CAN ID. In Fig. 5C, for the data frame with CAN ID of "100", the upper threshold is $10 + \Delta mh$ (ms), and the lower threshold is $10 - \Delta ml$ (ms). Therefore, for the data frame with CAN ID of "100", the normal cycle range W is a range of $(10 - \Delta ml)$ ms or more and $(10 + \Delta mh)$ ms or less. In this way, the upper threshold and the lower threshold are values that provide thresholds for the range of the reception cycle determined to be normal.

### 2. CYBER ATTACK DETECTION OPERATION

The cyber attack detection operation in the gateway apparatus 100 configured as described above, will be described below. The gateway apparatus 100 detects a cyber attack based on the change of the reception cycle of the data flowing through the in-vehicle network 200.

According to the CAN protocol, there are a type of the data frame transmitted periodically, and another type of the data frame transmitted aperiodically. When the periodically transmitted data frame is received with a cycle that greatly deviates from the originally expected reception cycle (expected cycle), the data frame is highly likely to be not a normal data frame, but there is a high possibility of a spoofed data frame transmitted by any cyber attack. Thus, the gateway apparatus 100 monitors the reception cycle of the periodically transmitted data frame, and determines that there has been any cyber attack when the expected reception cycle (expected cycle) is not within the normal cycle range.

That is, the gateway apparatus 100 monitors the reception cycle of the data frames having the periodicity, and determines that the reception cycle is normal and an attack is not received when the cycle is within the normal cycle range. On the other hand, when the reception cycle is out of the normal cycle range, the gateway apparatus 100 determines that the reception cycle is abnormal, and detects the reception of any attack.

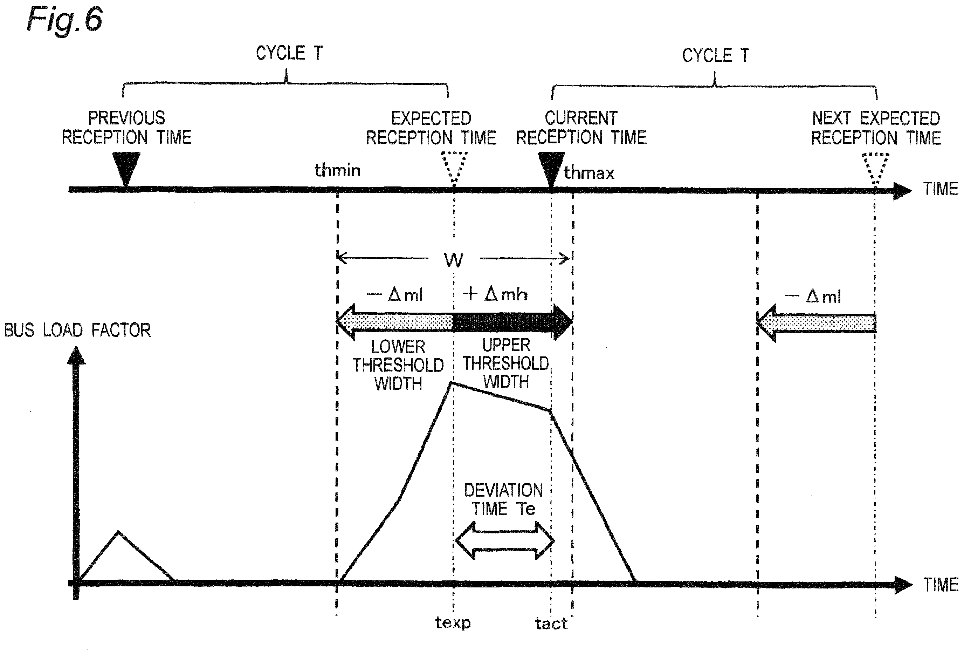

More specifically, the gateway apparatus 100 determines presence or absence of any attack based on the reception cycle as described below. With reference to Fig. 6, the data frame with a certain CAN ID having the cycle T is described in the case of an example case where the reception time expected from the previous reception is texp, and the current time at which the data frame is actually received is tact. In this case, by using the lower threshold width $\Delta ml$ and the upper threshold width $\Delta mh$, which are stored in the cycle threshold table 85, the minimum threshold time thmin indicating a lower limit of the normal cycle range W, and the maximum threshold time thmax indicating an upper limit of the normal cycle range W, are calculated by the following equations:

$$\text{thmin} = \text{texp} - \Delta ml \qquad (2a)$$

$$\text{thmax} = \text{texp} + \Delta mh \qquad (2b)$$

In this case, the upper threshold width $\Delta mh$ and the lower threshold width $\Delta ml$ are calculated by the following respective equations based on the bus load factor L. The bus load factor L is an index indicating a congestion degree of data transmitted through the bus. The method for calculating the bus load factor L will be described later.

$$\Delta mh = Te \times L \qquad (3a)$$

$$\Delta ml = \Delta mh \qquad (3b)$$

$$Te = tact - texp \qquad (3c)$$

When the reception time tact is within the normal cycle range W that is greater than or equal to thmin and smaller than or equal to thmax, which are obtained as described above, then the reception cycle is within a normal range, and thus each of the data frames is determined to be normal. On the other hand, when the reception time tact is earlier than the minimum threshold time thmin or later than the maximum threshold time thmax, the reception cycle is out of the normal cycle range, and thus it is determined that an attack has been received.

At this time, the upper threshold width $\Delta mh$ and the lower threshold width $\Delta ml$ are changed according to the bus load factor L, that is a congestion degree in the bus, as expressed by the equations (3a) and (3b). That is, the threshold for cycle determination is changed according to the bus load factor L, that is the congestion degree in the bus. Specifically, when the bus is congested or busy, the upper threshold width $\Delta mh$ and the lower threshold width $\Delta ml$ are increased to increase the normal cycle range W serving as a determination criterion. As a result, the probability of false recognition of the frame delayed due to congestion in the bus as an attack frame is reduced. On the other hand, when the bus is not congested or busy, the upper threshold width $\Delta mh$ and the lower threshold width $\Delta ml$ are reduced to reduce the normal cycle range W. As a result, the accuracy of detecting an actual attack frame is improved.

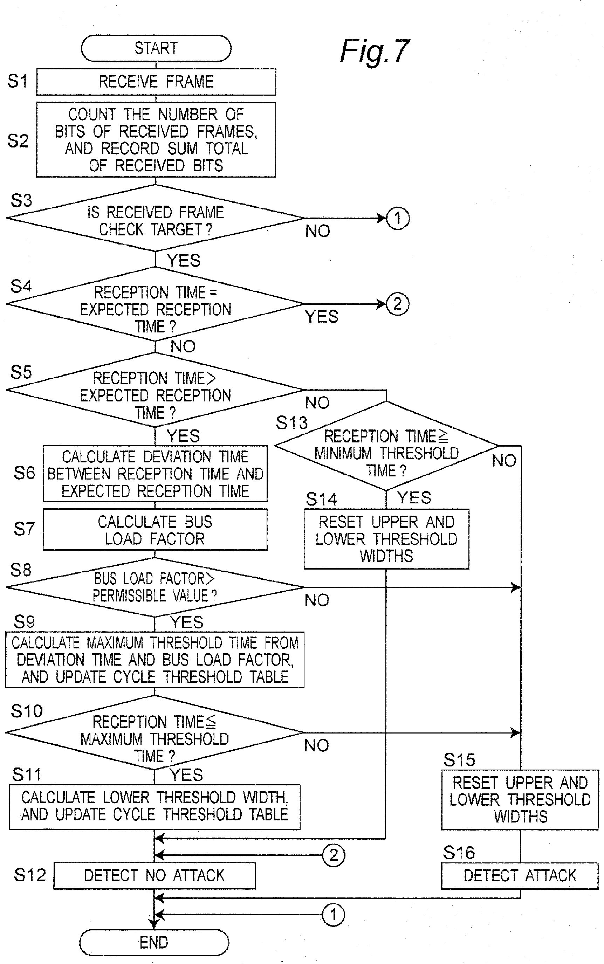

Fig. 7 is a flowchart illustrating an attack detection operation by the gateway apparatus 100 according to the first embodiment. The attack detection operation by the gateway apparatus 100 will be described below with reference to Fig. 7. It should be noted that processing illustrated in Fig. 7 is repeatedly executed at a predetermined control cycle.

In the gateway apparatus 100, the frame reception unit 121 receives the data frames transmitted through the in-vehicle network 200 (S1).

The bit count unit 113 counts the number of bits of each received data frame, adds the number to the number of bits of another data frame received at the same reception time to obtain the sum total of received bits, and records the sum total of received bits for each reception time in the bit count holding unit 141 (S2). The bit count unit 113 may acquire a value stored in a DLC as the number of bits instead of actually counting the number of bits of the received data frames.

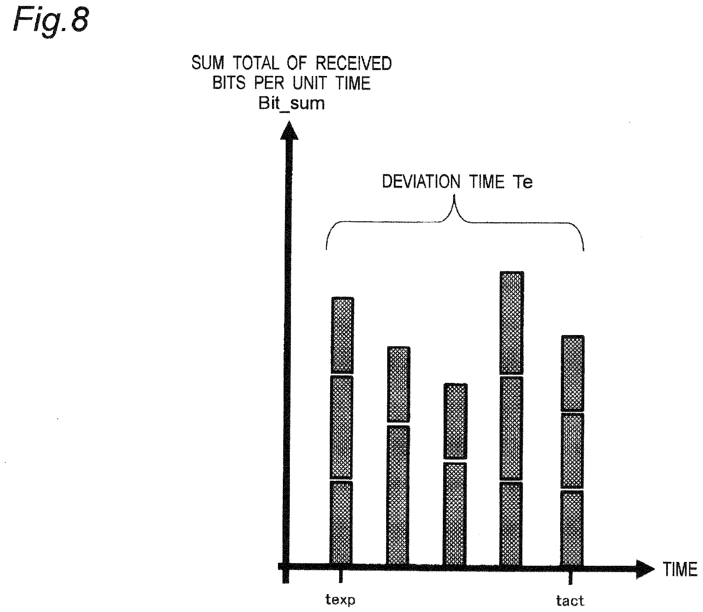

That is, as illustrated in Fig. 8, the bit count unit 113 obtains the sum total of received bits per unit time (Bit_sum) for each reception time, and then, records the sum in the bit count table 83. For example, in an example of Fig. 5B, three data frames are received at the reception time "2011", and the number of bits of each of the data frames is 121, 95, and 45. Therefore, for the reception time "2011", the bit count unit 113 adds up the received bits, and records "261" in the bit count table 83, as the sum total of received bits per unit time. In addition, at the reception time "2012", two data frames of 68 bits and 75 bits have been received. Therefore, the bit count unit 113 records "143" in the bit count table 83 as the sum total of received bits. At the reception time "2013", no data frame has been received. Therefore, the sum total of received bits "0" is recorded in the bit count table 83. At the reception time "2014", the data frame of 111 bits has been received. Therefore, the sum total of received bits "111" is recorded in the bit count table 83.

The frame check unit 111 checks whether or not the received data frame is the check target data frame for detecting a cyber attack (S3). Specifically, the frame check unit 111 refers to the frame information table 81, and checks whether or not the received data frame is a frame having a periodicity based on the CAN ID of the received data frame. When the received data frame is a frame having a periodicity, the frame check unit 111 determines that the received data frame is the check target frame for detecting the cyber attack.

When the received data frame is not a check target frame (NO in S3), the processing ends.

On the other hand, when the received data frame is a check target frame (YES in S3), the frame check unit 111 further determines whether or not the reception time tact is equal to the expected reception time texp (S4) for the data frame. The expected reception time texp is obtained by adding the expected cycle T of the data frame to the previous reception time. The expected cycle T is acquired with reference to the frame information table 81 based on the CAN ID of the received data frame.

When the reception time tact is equal to the expected reception time texp (YES in S4), the data frame is received in the normal cycle. Therefore, the attack detection unit 117 determines that any cyber attack has not been detected (S12), and the processing ends.

When the reception time tact is not equal to the expected reception time texp (NO in S4), the frame check unit 111 determines whether or not the reception time tact is later than the expected reception time texp (S5).

When the reception time tact is later than the expected reception time texp (YES in S5), the bus load factor calculation unit 114 calculates the deviation time Te indicating the deviation amount of the reception time tact with respect to the expected reception time texp (S6). Next, the bus load factor calculation unit 114 calculates the bus load factor L according to the following equation (S7).

[Equation 1]

$$L = \frac{\sum_{t_{exp}}^{t_{act}} Bit\_sum}{T_e \times BPS} \qquad (4)$$

In this case, BPS denotes a data transfer rate through the bus.

That is, as illustrated in Fig. 8, the bus load factor calculation unit 114 calculates the bus load factor L, from the deviation time Te, and the sum total of bits Bit_sum received at each reception time between the expected reception time texp and the reception time tact (S7). The sum total of bits Bit_sum, at respective reception times between the expected reception time texp and the reception time tact, can be acquired from the bit count table 83.

After calculating the bus load factor L, the bus load factor calculation unit 114 compares the calculated bus load factor L with the permissible value PL (permissible value) of the bus load factor (S8). The permissible value PL of the bus load factor is acquired with reference to the frame information table 81 based on the CAN ID of the received data frame.

In this case, the permissible value PL of the bus load factor will be described. The permissible value PL of the bus load factor is a threshold for determining whether or not the delay of the data frame is caused due to a congestion in the bus. When the bus is in a state of having a congestion degree exceeding the permissible value PL, it is considered that a large number of other frames having the higher priority than a received data frame are being transmitted. Therefore, in this case, even if there is a significant delay, it is determined that the delay is caused not due to an attack, but by congestion in the bus due to the transmission of other frames having the higher priority. On the other hand, when the bus does not exceed the permissible value PL, the reception cycle of the frame is determined regardless of influence of the congestion in the bus.

That is, when the traffic through the bus is congested or busy, the frame with a higher priority is preferentially transmitted. Therefore, the data frame originally having the high priority is less likely to be delayed irrespective of the congestion in the bus, and thus, it is not easily affected by the traffic through the bus. On the other hand, the data frame having the low priority is held over to be sent, and thus is easily affected by the traffic through the bus and more likely to be delayed. From these points, because the data frame having the high priority is less likely to be delayed, the delay of the data frame can be considered to be caused due to an attack if there is a little delay even when the bus is not congested or busy. On the other hand, because the data frame having the low priority is more likely to be delayed, the delay of the data frame can be considered to be caused not due to an attack, but by congestion in the bus if there is a significant delay when the bus is congested or busy.

Thus, in the present embodiment, the permissible value PL of the bus load factor is set according to the priority of the data frame. The permissible value PL is a criterion for when determining that the delay is caused due to a congestion in the bus 201 (that is, the delay is not due to the attack). That is, when the data frame has high priority, the permissible value PL is set to be low (a reference value for determining congestion is set to a stricter criterion). In addition, when the data frame has low priority, the permissible value PL is set to be high (the reference value for determining the congestion is set to a looser criterion). As illustrated in Fig. 5A, the permissible value PL is preset for each data frame priority, namely, for each data frame type (CAN ID), and is managed in the frame information table 81.

The bus load factor calculation unit 114 reads the frame information table 81 from the reception cycle information holding unit 143. The bus load factor calculation unit 114 refers to the frame information table 81, and acquires the permissible value PL (permissible value) of the bus load factor based on the CAN ID of the received data frame. For example, in an example of Fig. 5A, when "the CAN ID is "100", "90%" is acquired as the permissible value PL of the bus load factor.

When the calculated bus load factor L is equal to or smaller than the permissible value PL in Step S8 (NO in S8), it is considered that the bus is not so congested that the received data frame is affected by the congestion. Therefore, it is considered that the delay (that is, the deviation of the reception cycle) occurs because the data frame is not a normal data frame but is a spoofed data frame due to any cyber attack. Thus, when the bus load factor L is equal to or smaller than the permissible value PL (NO in S8), the attack detection unit 117 detects that any cyber attack has been received (S16). At this time, the reception cycle threshold update unit 116 resets the upper threshold width Δmh and the lower threshold width Δml to predetermined values, respectively, and updates the cycle threshold table 85 in the reception cycle threshold holding unit 145 with the reset values (S15).

On the other hand, when the calculated bus load factor L is equal greater than the permissible value PL in Step S8 (YES in S8), the reception cycle threshold calculation unit 115 calculates the maximum threshold time (thmax) that defines the upper limit of the normal cycle range W (S9).

Therefore, the reception cycle threshold calculation unit 115 first obtains the upper threshold width Δmh, from the deviation time Te and the bus load factor L by using the equation (3a). Then, the reception cycle threshold calculation unit 115 obtains the maximum threshold time thmax from the expected reception time texp and the upper threshold width Δmh by using the equation (2b). The reception cycle threshold update unit 116 updates the cycle threshold table 85 in the reception cycle threshold holding unit 145 by using the calculated upper threshold width Δmh.

After that, the attack detection unit 117 determines whether the reception time tact is equal to or earlier than the maximum threshold time thmax (S10).

When the reception time tact is equal to or earlier than the maximum threshold time thmax (YES in S10), the cycle of the received data frame is within the normal cycle range W. Therefore, it is considered that no attack has been received. In this case, the attack detection unit 117 determines that no cyber attack has been detected (S12). In addition, the reception cycle threshold update unit 116 calculates the lower threshold width Δml by using the equation (3b), and updates the cycle threshold table 85 in the reception cycle threshold holding unit 145 (S11).

On the other hand, when the reception time tact is later than the maximum threshold time thmax (NO in S10), the reception cycle of the data frame is out of the normal cycle range W. Therefore, it is considered that an attack has been received, and the attack detection unit 117 detects that any cyber attack has been received (S16). At this time, the reception cycle threshold update unit 116 resets the upper threshold width Δmh and the lower threshold width Δml to the predetermined values, respectively, and updates the cycle threshold table 85 in the reception cycle threshold holding unit 145 (S15).

The processing returns to Step S5, and when the reception time tact is earlier than the expected reception time texp (NO in S5), it is determined whether the reception time tact is equal to or later than the minimum threshold time thmin (S13).

When the reception time tact is equal to or later than the minimum threshold time thmin (YES in S13), it is considered that the reception cycle of the received data frame is within the normal cycle range W. Therefore, it is determined that no attack has been received (S12). At this time, the reception cycle threshold update unit 116 resets the upper threshold width Δmh and the lower threshold width Δml to the predetermined values, respectively, and updates the cycle threshold table 85 in the reception cycle threshold holding unit 145 (S14).

On the other hand, when the reception time tact is earlier than the minimum threshold time thmin (NO in S13), the reception cycle is not within the normal cycle range W. Therefore, in this case, it is considered that an attack by a spoofed data frame has been received. That is, the attack detection unit 117 detects that any cyber attack has been received (S16). In addition, the reception cycle threshold update unit 116 resets the upper threshold width Δmh and the lower threshold width Δml to the predetermined values, respectively, and updates the cycle threshold table 85 in the reception cycle threshold holding unit 145 (S15).

As described above, in the present embodiment, a width of the normal cycle range W (in other words, the threshold of the normal cycle range W) for determining a received frame to be normal is changed based on a state of congestion in the bus 201 (indicated by bus load factor L). As a result, the false detection of the attack on the frame delayed caused due to the congestion can be reduced when the bus 201 is congested or busy, and the accuracy of detecting the attack frame can be improved when the bus is not congested or busy.

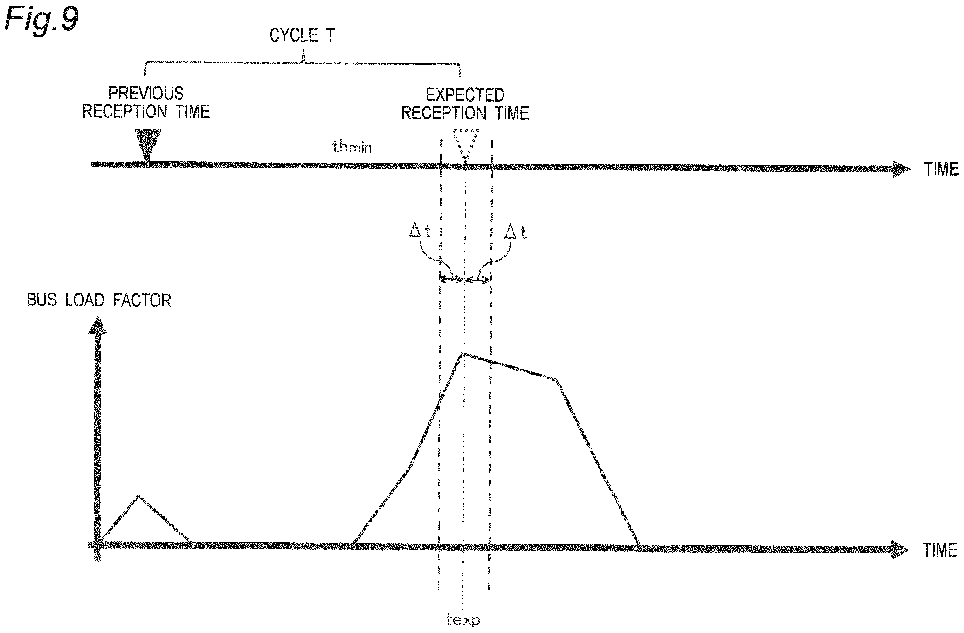

It should be noted that, in Step S4 in the above-described flowchart, reception time tact is compared with the expected reception time texp. As illustrated in Fig. 9, the expected time texp may be set longer taking into consideration the factor of the delay, such as jitter, other than low priority. For example, an expected reception time range having a predetermined margin ± Δt may be set from a center value of the expected time texp as a reference.

$$\text{texp} - \Delta t \leq \text{expected reception time range} \leq \text{texp} + \Delta t \quad (5)$$

Then, in Step S4, it may be determined whether or not the reception time tact falls within a range of the expected time. In this case, in Step S5, it is only required to determine whether or not the reception time tact is later than the expected reception time range. In addition, in Step S13, it is only required to further subtract the margin Δt from the value obtained by the equation (2a) to obtain the minimum threshold time, and to compare the obtained minimum threshold time with the reception time tact.

As described above, the gateway apparatus 100 according to the present embodiment is an apparatus that is connected to the bus 201 through which the data frames are transmitted at a predetermined cycle, and that detects the attack on equipment connected to the bus 201. The gateway apparatus 100 includes the frame reception unit 121 that receives the data frames transmitted through the bus 201; the attack detection unit 117; and the bus load factor calculation unit 114. The attack detection unit 117 determines whether or not the reception cycle of the check target data frame is within a normal range by using the threshold (for example, Thmin, Thmax, or $\Delta$ml, $\Delta$mh) indicating the normal range, and detects presence or absence of the attack based on a determination result. The bus load factor calculation unit 114 calculates the bus load factor L indicating a congestion degree in the bus based on contents of the received data frame, and the reception cycle threshold calculation unit 115 decides the threshold according to the calculated bus load factor.

The reception cycle threshold calculation unit 115 decides the threshold (for example, Thmin, Thmax, or $\Delta$ml, $\Delta$mh) so that the normal cycle range W becomes wider as the bus load factor indicates a higher congestion degree in the bus.

According to the above-described configuration, the threshold width $\Delta$ml, $\Delta$mh or the threshold time Thmin, Thmax that defines the normal cycle range is changed according to the bus load factor L indicating a congestion degree in the bus 201. That is, the threshold of the normal cycle range for determination of the reception cycle is changed according to the bus load factor L. As a result, it is possible to prevent any false detection of the normal frame as an attack frame when the data frame is delayed due to congestion in the bus 201, while it is possible to detect the attack frame accurately when the bus is not congested or busy.

In addition, according to the CAN protocol, the transmission priority of the data frames differs for each type of data frames. When the bus load factor is equal to or smaller than the permissible value (S8), the attack detection unit 117 further detects that there has been an attack (S16). As a result, when the data frame is delayed even if the bus is not congested or busy, it is determined that the cause is any cyber attack. In addition, the permissible value is set according to the priority of the data frame. As a result, it is possible to set an appropriate permissible value for each of the data frame having the high priority and less likely to be delayed and the data frame having the low priority and more likely to delayed.

SECOND EMBODIMENT

In the first embodiment, the bus load factor that is an index indicating a congestion degree in the bus 201 is calculated as the ratio L of the sum total of received bits, with respect to the maximum possible number of bits of the bus between the expected time texp and the reception time tact, as expressed by the equation (4). The method for calculating the bus load factor is not limited to this. In the present embodiment, the attack detection operation using a bus load factor LB different from the bus load factor according to the first embodiment will be described. It should be noted that a hardware configuration of a gateway apparatus 100 is the same as the hardware configuration according to the first embodiment.

In the present embodiment, the bus load factor LB is calculated as the number of bits of a frame received per unit time. Then, the width of the normal cycle range W is set according to time during which the bus load factor LB exceeds the threshold PB.

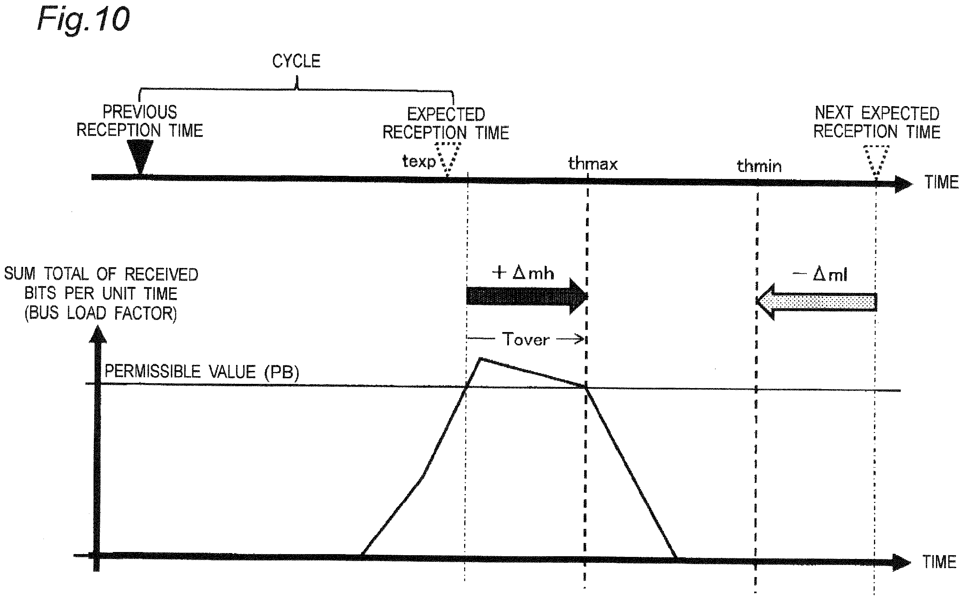

Fig. 10 is a diagram for describing an attack detection operation by the gateway apparatus 100 according to the second embodiment. In the present embodiment, the bus load factor LB is calculated for each predetermined reception time for various kinds of the data frames having the periodicity. Specifically, the bus load factor calculation unit 114 obtains the sum total of bits of a frame received per unit time as the bus load factor LB.

$$LB = \text{sum total of bits of frame received during unit time/unit time} \qquad (6)$$

Then, for the various kinds data frames having periodicity, when no data frame is received even after the expected reception time texp elapses, time Tover is calculated. During the time Tover, the bus load factor LB continuously exceeds the permissible value PB after the elapse of the expected reception time texp. Then, a width of the normal cycle range W is set based on the elapsed time Tover. More specifically, the upper threshold width $\Delta$mh for deciding the maximum threshold time thmax indicating the upper limit of the normal cycle range W and the lower threshold width $\Delta$ml for deciding the minimum threshold time thmin indicating the lower limit of the normal cycle range W are set by the following equations.

$$\Delta mh = Tov \qquad (7a)$$

$$\Delta ml = \Delta mh \qquad (7b)$$

In this case, the permissible value PB of the bus load factor LB is previously stored in a frame information table 81b as illustrated in Fig. 5A. The permissible value PB of the bus load factor LB is set for each CAN ID in a manner similar to that of the first embodiment.

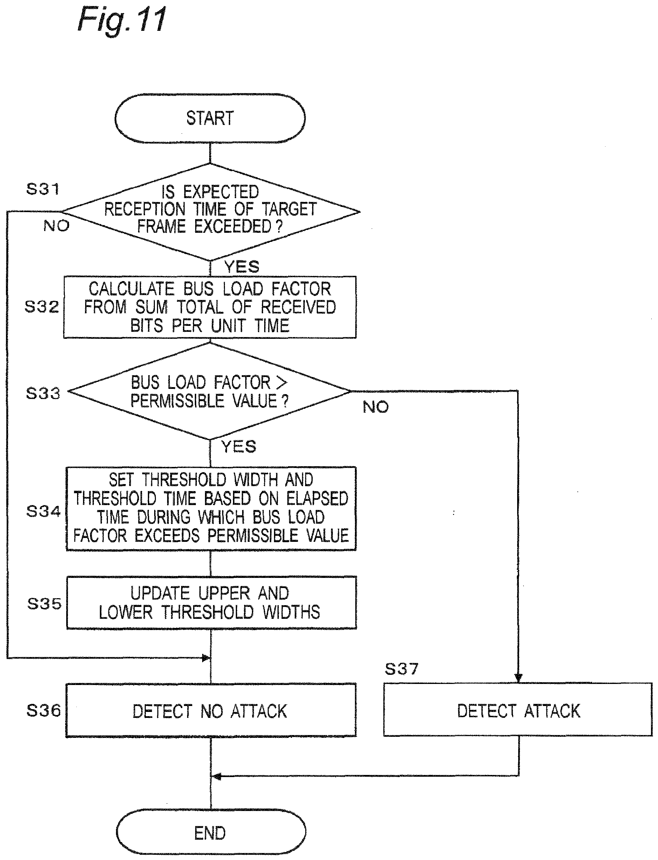

Fig. 11 is a first flowchart illustrating an attack detection operation by the gateway apparatus 100 according to the second embodiment. The processing illustrated in Fig. 11 is repeatedly executed at a predetermined cycle by a CPU 110. In addition, the processing illustrated in Fig. 11 is performed for each type (CAN ID) of the data frame having the periodicity.

The bit count unit 113 determines whether or not the reception time tact of the data frame of the type to be the check target exceeds the expected reception time texp (S31). When the reception time tact exceeds the expected reception time texp (YES in S31), the bit count unit 113 calculates the bus load factor LB by adding up the number of bits of each of all received frames for each predetermined reception time to calculate the sum total of bits (Bit_sum) (S32). For example, in an example illustrated in Fig. 5B, the bus load factor LB at the time "2011" is 261 (= 121 + 95 + 45). Similarly, the bus load factor LB at the time "2012" is 143 (= 68 + 75). The bus load factor LB at the time "2013" is zero, and the bus load factor LB at the time "2014" is 111.

The reception cycle threshold calculation unit 115 determines whether or not the bus load factor LB of the data frame of the type to be the check target is greater than the permissible value PB (S33). The permissible value PB is acquired from the frame information table 81b according to the type of the data frame (CAN ID).

When the bus load factor LB is greater than the permissible value PB (YES in S33), the reception cycle threshold calculation unit 115 sets the maximum threshold time Thmax based on the time Tover during which the sum total of bits continuously exceeds the threshold (S34).

Specifically, the reception cycle threshold calculation unit 115 decides, by using the equations (7a) and (7b), the upper threshold width $\Delta$mh and the lower threshold width $\Delta$ml of the normal cycle range W based on the time Tover during which the sum total of received bits continuously exceeds the permissible value PB. Then, the reception cycle threshold calculation unit 115 obtains the maximum threshold time thmax and the minimum threshold time thmin by using the values $\Delta$mh and $\Delta$ml.

The reception cycle threshold update unit 116 updates the cycle threshold table 85 by using the upper threshold width $\Delta$mh and the lower threshold width $\Delta$ml, which are obtained in a process of calculating the maximum threshold time thmax and the minimum threshold time thmin (S35). As a result, the normal cycle range W is updated.

The bus load factor (indicated by the sum total of received bits per unit time) LB greater than the permissible value PB indicates that the bus is in a state of congestion with a large amount of data being transmitted through the bus. Therefore, the delay in frame reception is considered to be caused not due to an attack, but by the congestion in the bus. Therefore, when the bus load factor LB is greater than the threshold PB (YES in S33), the attack detection unit 117 detects that there is no cyber attack (S36).

On the other hand, when the bus load factor LB is equal to or smaller than the permissible value PB (NO in S33), the bus is not in a state of congestion. The delay in the reception of the frame without any bus congestion, that is an abnormal reception cycle, means that the frame is considered a spoofed frame due to any cyber attack. Therefore, when the bus load factor LB is equal to or smaller than the permissible value PB (NO in S33), the attack detection unit 117 detects that any cyber attack has been received (S37).

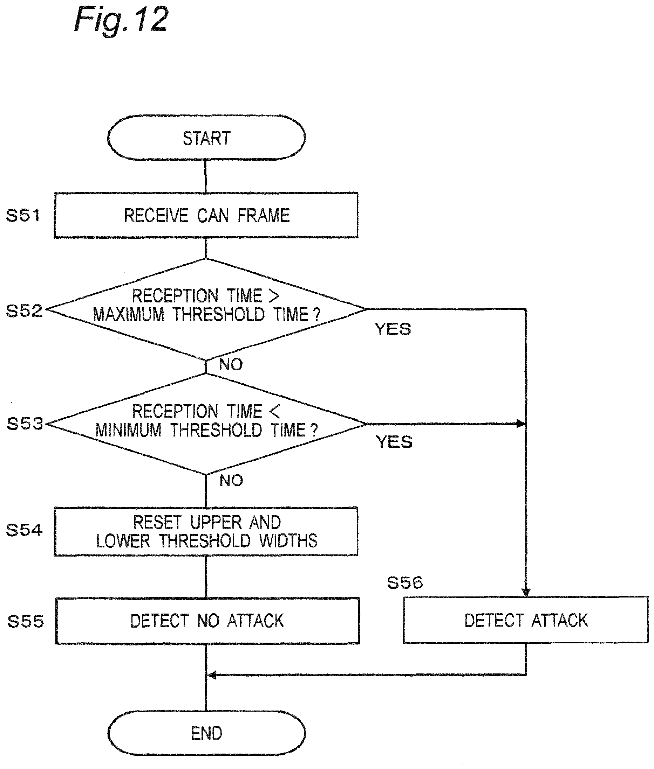

Fig. 12 is a second flowchart illustrating an attack detection operation based on the maximum threshold time and the minimum threshold time that are set as described above.

In the gateway apparatus 100, a frame reception unit 121 receives the data frames transmitted through the bus of the in-vehicle network 200 (S51).

The attack detection unit 117 determines whether or not the reception time tact is later than the maximum threshold time thmax (S52). When the reception time tact is later than the maximum threshold time thmax (YES in S52), the attack detection unit 117 detects that any cyber attack has been received (S56).

When the reception time tact is equal to or earlier than the maximum threshold time thmax (NO in S52), the attack detection unit 117 determines whether or not the reception time tact is earlier the minimum threshold time thmin (S53).

When the reception time tact is earlier than the minimum threshold time thmin (YES in S53), the attack detection unit 117 detects that any cyber attack has been received (S56).

When the reception time tact is equal to or later than the minimum threshold time thmin (NO in S53), the attack detection unit 117 detects that any cyber attack has not been received (S55). At that time, the reception cycle threshold calculation unit 115 resets the upper threshold width $\Delta$mh and the lower threshold width $\Delta$ml to the predetermined values (S54).

As described above, in the present embodiment, the sum total of received bits per unit time is used as the bus load factor LB, which is an index indicating a congestion degree in the bus. Then, the upper threshold width $\Delta$mh and the lower threshold width $\Delta$ml, which define the normal cycle range, are changed based on the elapsed time Tover during which the sum total of received bits LB per unit time exceeds a predetermined value. In other words, the threshold at a time of cycle determination is dynamically changed based on elapsed time during which the sum total of received bits per unit time exceeds a predetermined value. In this way, by dynamically changing the threshold for cycle determination, it is possible to prevent false detection when the bus is busy, and to improve detection the accuracy when the bus is not busy.

MODIFIED EMBODIMENTS

In the above-described embodiments, the example in which a configuration of an abnormality detection apparatus (and method) according to the present invention is applied to an in-vehicle network has been described. However, the configuration may be similarly applied to another type of network.

In the above-described embodiments, an example in which the abnormality detection apparatus according to the present disclosure is applied to the gateway apparatus 100 has been described. However, the abnormality detection apparatus may be applied to another type of equipment. For example, the abnormality detection apparatus according to the present disclosure can be applied to various kinds of equipment connected to a network such as an ECU 300.

In the above-described embodiments, the bus load factor obtained by using by the equation (4) or the equation (6) has been described as an example of the bus load value, which is an index indicating the congestion degree in the bus. However, the bus load value is not limited to this. Any information can be used as the bus load value as long as the information quantitatively indicates the congestion in the bus.

Because the above-described embodiments are provided for exemplifying the techniques in the present disclosure, various changes, replacements, additions, omissions, or the like can be made within the scope of the claims or an equivalent scope.

DESCRIPTION OF REFERENCE CHARACTERS

| | |
|---|---|
| 10 | VEHICLE |
| 100 | GATEWAY APPARATUS |
| 110 | CPU |
| 111 | FRAME CHECK UNIT |
| 113 | BIT COUNT UNIT |
| 121 | FRAME RECEPTION UNIT |
| 120 | RAM |
| 130 | ROM |
| 140 | DATA STORAGE UNIT |
| 150 | FIRST COMMUNICATION INTERFACE |
| 160 | SECOND COMMUNICATION INTERFACE |
| 200a, 200b, 200 | IN-VEHICLE NETWORK |
| 201a, 201b, 201 | BUS |
| 300 | ECU (ELECTRONIC CONTROL UNIT) |

**Claims**

1. An abnormality detection apparatus (100) connectable to a bus (201, 201a, 201b) through which a data frame is transmitted at a predetermined cycle, the abnormality detection apparatus (100) adapted to detect an attack on equipment connected to the bus (201, 201a, 201b), the abnormality detection apparatus (100) comprising:

a frame reception unit (121) adapted to receive a data frame transmitted through the bus (201, 201a, 201b);
an attack detection unit (117) adapted to determine whether or not a reception cycle of a check target data frame is within a normal range by using a threshold indicating a normal range, and to detect presence or absence of an attack based on a determination result,
**characterized in that**
the abnormality detection apparatus (100) further comprises:

a bus load calculation unit (114) adapted to calculate a bus load value (L, LB) indicating a congestion degree in the bus (201, 201a, 201b) based on contents of the data frame that the frame reception unit (121) receives; and

a reception cycle threshold calculation unit (115) adapted to decide the threshold according to the bus load value (L, LB) that the bus load calculation unit (114) calculates.

2. The abnormality detection apparatus (100) as claimed in claim 1, wherein the reception cycle threshold calculation unit (115) is adapted to decide the threshold so that the normal range becomes wider as the bus load value (L, LB) indicates a higher congestion degree in the bus (201, 201a, 201b).

3. The abnormality detection apparatus (100) as claimed in claim 1 or 2,

wherein a plurality of types of data frames is transmitted through the bus (201, 201a, 201b),
wherein transmission priority of the data frames differs for each type of data frames,
wherein the attack detection unit (117) is further adapted to detect that there has been an attack (S16, S37) when the bus load value (L, LB) is equal to or smaller than a permissible value (PL, PB) (S8, S33), and
wherein the permissible value (PL, PB) is set to a smaller value as the transmission priority of the data frames is higher.

4. The abnormality detection apparatus (100) as claimed in claim 1, wherein the bus load value (L, LB) is a ratio (L) of a sum total of bits of received data to a sum total of bits capable of being communicated through the bus (201, 201a, 201b) for a time interval (Te) that includes reception time of the data frame and has a width of a normal cycle range.

5. The abnormality detection apparatus (100) as claimed in claim 1, wherein the bus load value (L, LB) is a sum total (LB) of bits of a data frame received during unit time.

6. The abnormality detection apparatus (100) as claimed in claim 5, wherein the reception cycle threshold calculation unit (115) is adapted to decide the threshold according to a duration for which the bus load value (L, LB) continuously exceeds a predetermined value with respect to a data frame for which expected reception time elapses, the expected reception time being time at which the data frame is expected to be received.

7. The abnormality detection apparatus (100) as claimed in any one of claims 1 to 6,
wherein the abnormality detection apparatus (100) is connected to a network (200, 200a, 200b) in a vehicle (10).

8. The abnormality detection apparatus (100) as claimed in claim 7, wherein the data frame is transmitted according to a controller area network (CAN) protocol.

9. An abnormality detection method of detecting an attack on equipment connected to the bus (201, 201a, 201b), through which a data frame is transmitted at a predetermined cycle, the method comprising steps of:

receiving (S1) the data frame;
calculating (S7, S32) a bus load value (L, LB) indicating a congestion degree in the bus (201, 201a, 201b) based on contents of the received data frame;
deciding (S9, S11, S34) a threshold of a normal range of a reception cycle of a data frame based on the calculated bus load value (L, LB);
determining (S10, S13, S52, S53) whether or not a reception cycle of a check target data frame is within a normal range by using the decided threshold; and
detecting (S12, S16, S55, S56) presence or absence of an attack based on a determination result.

10. The abnormality detection method as claimed in claim 9,
wherein the deciding step includes a step of deciding the threshold so that the normal range becomes wider as the bus load value (L, LB) indicates a higher congestion degree in the bus (201, 201a, 201b).

11. The abnormality detection method as claimed in claim 9 or 10, further comprising a step of detecting that there has been an attack when a bus load value (L, LB) is equal to or smaller than a permissible value (PL, PB), wherein a plurality of types of data frames is transmitted through the bus (201, 201a, 201b), transmission priority of the data frames differs for each type of data frames, and the permissible value (PL, PB) is set to a smaller value as the priority of the data frame is higher.

12. A program for controlling an abnormality detection apparatus (100) connected to a bus (201, 201a, 201b) through which a data frame is transmitted at a predetermined cycle, the abnormality detection apparatus (100) detecting an attack on equipment connected to the bus (201, 201a, 201b), the program when executed on a control unit of the abnormality detection apparatus (100) causes the control unit to execute the steps of:

receiving (S1) a data frame; and
calculating (S7, S32) a bus load value (L, LB) indicating a congestion degree in the bus (201, 201a, 201b) based on contents of the received data frame,
deciding (S9, S11, S34) a threshold of a normal range of a reception cycle of a data frame based on the calculated bus load value (L, LB);
determining (S10, S13, S52, S53) whether or not a reception cycle of a check target data frame is within a normal range by using the decided threshold; and
detecting (S12, S16, S55, S56) presence or absence of an attack based on a determination result.

13. The program according to claim 12,
wherein the deciding step (S9, S11, S34) include a step of deciding the threshold so that the normal range becomes wider as the bus load value (L, LB) indicates a higher congestion degree in the bus (201, 201a, 201b).

14. The program as claimed in claim 12 or 13,

wherein the program further controls the abnormality detection apparatus (100) to execute the steps of detecting that there has been an attack when the bus load value (L, LB) is equal to or smaller than a permissible value (PL, PB),
wherein a plurality of types of data frames is transmitted through the bus (201, 201a, 201b), transmission priority of the data frames differs for each type of data frames, and
wherein the permissible value (PL, PB) is set to a smaller value as the priority of the data frame is higher.

**Patentansprüche**

1. Abnormalitätserkennungsvorrichtung (100), die mit einem Bus (201, 201a, 201b) verbunden werden kann, über den ein Datenframe in einem vorbestimmten Zyklus übertragen wird, wobei die Abnormalitätserkennungsvorrichtung (100) angepasst ist, um einen Angriff auf eine Ausrüstung zu erkennen, die mit dem Bus (201, 201a, 201b) verbunden ist, die Abnormalitätserkennungsvorrichtung (100) umfassend:

eine Frameempfangseinheit (121), die angepasst ist, um einen Datenframe zu empfangen, der über den Bus (201, 201a, 201b) übertragen wird;
eine Angriffserkennungseinheit (117), die angepasst ist, um zu bestimmen, ob ein Empfangszyklus eines Prüfzieldatenrahmens innerhalb eines normalen Bereichs ist, indem ein Schwellenwert verwendet wird, der einen normalen Bereich angibt, und um ein Vorhandensein oder Nichtvorhandensein eines Angriffs basierend auf einem Bestimmungsresultat zu erkennen,
**dadurch gekennzeichnet, dass**
die Abnormalitätserkennungsvorrichtung (100) ferner Folgendes umfasst:

eine Buslast-Berechnungseinheit (114), die angepasst ist, um einen Buslastwert (L, LB) zu berechnen, der einen Überlastungsgrad in dem Bus (201, 201a, 201b) basierend auf dem Inhalt des Datenframes angibt, den die Frameempfangseinheit (121) empfängt; und
eine Empfangszyklusschwellenwert-Berechnungseinheit (115), die angepasst ist, um den Schwellenwert abhängig von dem Buslastwert (L, LB) zu entscheiden, den die Buslast-Berechnungseinheit (114) berechnet.

2. Abnormalitätserkennungsvorrichtung (100) nach Anspruch 1,
wobei die Empfangszyklusschwellenwert-Berechnungseinheit (115) angepasst ist, den Schwellenwert zu entscheiden, sodass der normale Bereich breiter wird, wenn der Buslastwert (L, LB) einen höheren Überlastungsgrad in dem Bus (201, 201a, 201b) angibt.

3. Abnormalitätserkennungsvorrichtung (100) nach Anspruch 1 oder 2,

wobei eine Vielzahl von Typen von Datenframes über den Bus (201, 201a, 201b) übertragen wird,

wobei die Übertragungspriorität der Datenframes für jeden Typ von Datenframes verschieden ist,

wobei die Angriffserkennungseinheit (117) ferner angepasst ist, um zu erkennen, dass ein Angriff stattgefunden hat (S16, S37), wenn der Buslastwert (L, LB) gleich wie oder kleiner als ein zulässiger Wert (PL, PB) ist (S8, S33), und

wobei der zulässige Wert (PL, PB) auf einen kleineren Wert gesetzt wird, wenn die Übertragungspriorität der Datenframes höher ist.

4.  Abnormalitätserkennungsvorrichtung (100) nach Anspruch 1,
    wobei der Buslastwert (L, LB) ein Verhältnis (L) einer Gesamtsumme von Bits von empfangenen Daten zu einer Gesamtsumme von Bits ist, die über den Bus (201, 201a, 201b) über ein Zeitintervall (Te) übertragen werden können, das die Empfangszeit des Datenframes beinhaltet und eine Breite eines normalen Zyklusbereichs aufweist.

5.  Abnormalitätserkennungsvorrichtung (100) nach Anspruch 1,
    wobei der Buslastwert (L, LB) eine Gesamtsumme (LB) von Bits eines während einer Zeiteinheit empfangenen Datenframes ist.

6.  Abnormalitätserkennungsvorrichtung (100) nach Anspruch 5,
    wobei die Empfangszyklusschwellenwert-Berechnungseinheit (115) angepasst ist, um den Schwellenwert gemäß einer Dauer zu entscheiden, über die der Buslastwert (L, LB) kontinuierlich einen vorbestimmten Wert in Bezug auf einen Datenframe überschreitet, für den eine erwartete Empfangszeit verstreicht, wobei die erwartete Empfangszeit eine Zeit ist, an der erwartet wird, dass der Datenframe empfangen wird.

7.  Abnormalitätserkennungsvorrichtung (100) nach Anspruch 1 bis 6,
    wobei die Abnormalitätserkennungsvorrichtung (100) mit einem Netzwerk (200, 200a, 200b) in einem Fahrzeug (10) verbunden ist.

8.  Abnormalitätserkennungsvorrichtung (100) nach Anspruch 7,
    wobei der Datenframe gemäß einem Protokoll eines Controller Area Network (CAN) übertragen wird.

9.  Abnormalitätserkennungsverfahren zum Erkennen eines Angriffs auf Ausrüstung, die mit dem Bus (201, 201a, 201b) verbunden ist, über den ein Datenframe in einem vorbestimmten Zyklus übertragen wird, das Verfahren umfassend die folgenden Schritte:

    Empfangen (S1) des Datenframes;
    Berechnen (S7, S32) eines Buslastwertes (L, LB), der einen Überlastungsgrad in dem Bus (201, 201a, 201b) angibt, basierend auf dem Inhalt des empfangenen Datenframes;
    Bestimmen (S9, S11, S34) eines Schwellenwerts für einen normalen Bereich eines Empfangszyklus eines Datenframes basierend auf dem berechneten Buslastwert (L, LB);
    Bestimmen (S10, S13, S52, S53), ob ein Empfangszyklus eines Prüfzieldatenframes innerhalb eines normalen Bereichs ist, indem der bestimmte Schwellenwert verwendet wird; und
    Erkennen (S12, S16, S55, S56) des Vorhandenseins oder Nichtvorhandenseins eines Angriffs basierend auf einem Bestimmungsresultat.

10. Abnormalitätserkennungsverfahren nach Anspruch 9,
    wobei der Entscheidungsschritt einen Schritt eines Entscheidens des Schwellenwerts beinhaltet, sodass der normale Bereich breiter wird, wenn der Buslastwert (L, LB) einen höheren Überlastungsgrad in dem Bus (201, 201a, 201b) angibt.

11. Abnormalitätserkennungsverfahren nach Anspruch 9 oder 10, ferner umfassend einen Schritt eines Erkennens, dass es einen Angriff gab, wenn ein Buslastwert (L, LB) gleich wie oder kleiner als ein zulässiger Wert (PL, PB) ist, wobei eine Vielzahl von Typen von Datenframes über den Bus (201, 201a, 201b) übertragen wird, die Übertragungspriorität der Datenframe für jeden Typ von Datenframes verschieden ist und der zulässige Wert (PL, PB) auf einen kleineren Wert gesetzt wird, wenn die Priorität des Datenframes höher ist.

12. Programm zum Steuern einer Abnormalitätserkennungsvorrichtung (100), die mit einem Bus (201, 201a, 201b) verbunden ist, über den ein Datenframe in einem vorbestimmten Zyklus übertragen wird, wobei die Abnormalitätserkennungsvorrichtung (100) einen Angriff auf eine Ausrüstung erkennt, die mit dem Bus (201, 201a, 201b) verbunden ist, wobei das Programm, wenn es auf einer Steuereinheit der Abnormalitätserkennungsvorrichtung (100) ausgeführt wird, die Steuereinheit veranlasst, die folgenden Schritte auszuführen:

Empfangen (S1) eines Datenframes; und
Berechnen (S7, S32) eines Buslastwertes (L, LB), der einen Überlastungsgrad in dem Bus (201, 201a, 201b) angibt, basierend auf dem Inhalt des empfangenen Datenframes,
Bestimmen (S9, S11, S34) eines Schwellenwerts für einen normalen Bereich eines Empfangszyklus eines Datenframes basierend auf dem berechneten Buslastwert (L, LB);
Bestimmen (S10, S13, S52, S53), ob ein Empfangszyklus eines Prüfzieldatenframes innerhalb eines normalen Bereichs ist, indem der bestimmte Schwellenwert verwendet wird; und
Erkennen (S12, S16, S55, S56) des Vorhandenseins oder Nichtvorhandenseins eines Angriffs basierend auf einem Bestimmungsresultat.

**13.** Programm nach Anspruch 12,
wobei der Entscheidungsschritt (S9, S11, S34) einen Schritt eines Entscheidens des Schwellenwerts beinhaltet, sodass der normale Bereich breiter wird, wenn der Buslastwert (L, LB) einen höheren Überlastungsgrad in dem Bus (201, 201a, 201b) angibt.

**14.** Programm nach Anspruch 12 oder 13,

wobei das Programm ferner die Abnormalitätserkennungsvorrichtung (100) steuert, um die Schritte eines Erkennens, dass es einen Angriff gab, auszuführen, wenn der Buslastwert (L, LB) gleich wie oder kleiner als ein zulässiger Wert (PL, PB) ist,
wobei eine Vielzahl von Typen von Datenframes über den Bus (201, 201a, 201b) übertragen wird, wobei eine Übertragungspriorität der Datenframes für jeden Typ von Datenframes verschieden ist, und
wobei der zulässige Wert (PL, PB) auf einen kleineren Wert gesetzt wird, wenn die Priorität des Datenframes höher ist.

## Revendications

**1.** Appareil de détection d'anomalie (100) pouvant être connecté à un bus (201, 201a, 201b) via lequel une trame de données est transmise à un cycle prédéterminé, l'appareil de détection d'anomalie (100) étant adapté pour détecter une attaque sur un équipement connecté au bus (201, 201a, 201b), l'appareil de détection d'anomalie (100) comprenant :

une unité de réception de trame (121) adaptée pour recevoir une trame de données transmise via le bus (201, 201a, 201b) ;
une unité de détection d'attaque (117) adaptée pour déterminer si oui ou non un cycle de réception d'une trame de données cible de vérification se situe dans une plage normale en utilisant un seuil indiquant une plage normale, et pour détecter la présence ou l'absence d'une attaque sur la base d'un résultat de détermination,
**caractérisé en ce que**
l'appareil de détection d'anomalie (100) comprend en outre :

une unité de calcul de charge de bus (114) adaptée pour calculer une valeur de charge de bus (L, LB) indiquant un degré congestion dans le bus (201, 201a, 201b) sur la base du contenu de la trame de données que l'unité de réception de trame (121) reçoit ; et
une unité de calcul de seuil de cycle de réception (115) adaptée pour décider du seuil en fonction de la valeur de charge de bus (L, LB) que l'unité de calcul de charge de bus (114) calcule.

**2.** Appareil de détection d'anomalie (100) selon la revendication 1,
dans lequel l'unité de calcul de seuil de cycle de réception (115) est adaptée pour décider du seuil de sorte que la plage normale s'élargisse lorsque la valeur de charge de bus (L, LB) indique un degré de congestion plus élevé dans le bus (201, 201a, 201b).

**3.** Appareil de détection d'anomalie (100) selon la revendication 1 ou 2,

dans lequel une pluralité de types de trames de données est transmise via le bus (201, 201a, 201b),
dans lequel la priorité de transmission des trames de données diffère pour chaque type de trames de données,

dans lequel l'unité de détection d'attaque (117) est en outre adaptée pour détecter qu'une attaque est survenue (S16, S37) lorsque la valeur de charge de bus (L, LB) est égale ou inférieure à une valeur admissible (PL, PB) (S8, S33), et

dans lequel la valeur admissible (PL, PB) est définie sur une valeur plus petite lorsque la priorité de transmission des trames de données est plus élevée.

4.  Appareil de détection d'anomalie (100) selon la revendication 1,
    dans lequel la valeur de charge de bus (L, LB) est un rapport (L) d'une somme totale de bits de données reçues sur une somme totale de bits pouvant être communiqués via le bus (201, 201a, 201b) pendant un intervalle de temps (Te) qui comprend l'heure de réception de la trame de données et a une largeur d'une plage de cycle normale.

5.  Appareil de détection d'anomalie (100) selon la revendication 1,
    dans lequel la valeur de charge de bus (L, LB) est une somme totale (LB) de bits d'une trame de données reçue pendant un temps unitaire.

6.  Appareil de détection d'anomalie (100) selon la revendication 5,
    dans lequel l'unité de calcul de seuil de cycle de réception (115) est adaptée pour décider du seuil en fonction d'une durée pendant laquelle la valeur de charge de bus (L, LB) dépasse en continu une valeur prédéterminée par rapport à une trame de données pour laquelle l'heure de réception prévue s'est écoulée, l'heure de réception prévue étant l'heure à laquelle il est prévu que la trame de données soit reçue.

7.  Appareil de détection d'anomalie (100) selon l'une quelconque des revendications 1 à 6,
    dans lequel l'appareil de détection d'anomalie (100) est connecté à un réseau (200, 200a, 200b) dans un véhicule (10).

8.  Appareil de détection d'anomalie (100) selon la revendication 7,
    dans lequel la trame de données est transmise selon un protocole de réseau de zone de contrôleur (CAN).

9.  Procédé de détection d'anomalie pour détecter une attaque sur un équipement connecté au bus (201, 201a, 201b), via lequel une trame de données est transmise à un cycle prédéterminé, le procédé comprenant les étapes de :

    réception (S1) de la trame de données ;
    calcul (S7, S32) d'une valeur de charge de bus (L, LB) indiquant un degré de congestion dans le bus (201, 201a, 201b) sur la base du contenu de la trame de données reçue ;
    décision (S9, S11, S34) d'un seuil d'une plage normale d'un cycle de réception d'une trame de données sur la base de la valeur de charge de bus calculée (L, LB) ;
    détermination (S10, S13, S52, S53) si oui ou non un cycle de réception d'une trame de données cible de vérification se situe dans une plage normale en utilisant le seuil décidé ; et
    détection (S12, S16, S55, S56) de la présence ou l'absence d'une attaque sur la base d'un résultat de détermination.

10. Procédé de détection d'anomalie selon la revendication 9,
    dans lequel l'étape de décision comprend une étape de décision du seuil de sorte que la plage normale s'élargisse lorsque la valeur de charge de bus (L, LB) indique un degré de congestion plus élevé dans le bus (201, 201a, 201b).

11. Procédé de détection d'anomalie selon la revendication 9 ou 10, comprenant en outre une étape de détection qu'une attaque est survenue lorsqu'une valeur de charge de bus (L, LB) est égale ou inférieure à une valeur admissible (PL, PB),
    dans lequel une pluralité de types de trames de données est transmise via le bus (201, 201a, 201b), la priorité de transmission des trames de données diffère pour chaque type de trames de données, et la valeur admissible (PL, PB) est définie sur une valeur inférieure car la priorité de la trame de données est plus élevée.

12. Programme pour commander un appareil de détection d'anomalie (100) connecté à un bus (201, 201a, 201b) via lequel une trame de données est transmise à un cycle prédéterminé, l'appareil de détection d'anomalie (100) détectant une attaque sur un équipement connecté au bus (201, 201a, 201b), le programme, lorsqu'il est exécuté sur l'unité de commande de l'appareil de détection d'anomalie (100), amène l'unité de commande à exécuter les étapes de :

    réception (S1) d'une trame de données ; et

calcul (S7, S32) d'une valeur de charge de bus (L, LB) indiquant un degré de congestion dans le bus (201, 201a, 201b) sur la base du contenu de la trame de données reçue,

décision (S9, S11, S34) d'un seuil d'une plage normale d'un cycle de réception d'une trame de données sur la base de la valeur de charge de bus calculée (L, LB) ;

détermination (S10, S13, S52, S53) si oui ou non un cycle de réception d'une trame de données cible de vérification se situe dans une plage normale en utilisant le seuil décidé ; et

détection (S12, S16, S55, S56) de la présence ou l'absence d'une attaque sur la base d'un résultat de détermination.

**13.** Programme selon la revendication 12,

dans lequel l'étape de décision (S9, S11, S34) comprend une étape de décision du seuil de sorte que la plage normale s'élargisse lorsque la valeur de charge de bus (L, LB) indique un degré de congestion plus élevé dans le bus (201, 201a, 201b).

**14.** Programme selon la revendication 12 ou 13,

dans lequel le programme commande en outre l'appareil de détection d'anomalie (100) pour exécuter les étapes de détection qu'une attaque est survenue lorsque la valeur de charge de bus (L, LB) est égale ou inférieure à une valeur admissible (PL, PB),

dans lequel une pluralité de types de trames de données sont transmises via le bus (201, 201a, 201b), la priorité de transmission des trames de données diffère pour chaque type de trames de données, et

dans lequel la valeur admissible (PL, PB) est définie sur une valeur plus petite lorsque la priorité de la trame de données est plus élevée.

Fig. 1

# Fig.2

*Fig.3*

GATEWAY APPARATUS

100

113 BIT COUNT UNIT

121 FRAME RECEPTION UNIT

114 BUS LOAD FACTOR CALCULATION UNIT

115 RECEPTION CYCLE THRESHOLD CALCULATION UNIT

116 RECEPTION CYCLE THRESHOLD UPDATE UNIT

111 FRAME CHECK UNIT

141 BIT COUNT HOLDING UNIT

143 RECEPTION CYCLE INFORMATION HOLDING UNIT

117 ATTACK DETECTION UNIT

145 RECEPTION CYCLE THRESHOLD HOLDING UNIT

EP 3 796 195 B1

*Fig.4*

ONE FRAME

RECESSIVE

| ... | SOF | ID | RTR | IDE | r | DLC | DATA | CRC | DEL | ACK | DEL | EOF | ... |

DOMINANT

51  52  53  56  57  58  62

## Fig.5A

FRAME INFORMATION TABLE 81

| CAN ID | EXPECTED CYCLE (ms) | DLC | RTR | PERMISSIBLE VALUE OF BUS LOAD FACTOR (%) |
|---|---|---|---|---|
| 100 | 10 | 8 | 0 | 90 |
| 200 | 100 | 8 | 0 | 85 |
| 300 | 1000 | 8 | 0 | 80 |
| 400 | 0 | 6 | 0 | 0 |

## Fig.5B

BIT COUNT TABLE 83

| RECEPTION TIME (ms) | SUM TOTAL OF RECEIVED BITS PER UNIT TIME Bit_sum (bit) |
|---|---|
| 2011 | 261 (=121 + 95 + 45) |
| 2012 | 143 (=68 + 75) |
| 2013 | 0 (=0) |
| 2014 | 111 (=111) |

## Fig.5C

CYCLE THRESHOLD TABLE 85

| CAN ID | UPPER THRESHOLD (ms) | LOWER THRESHOLD (ms) |
|---|---|---|
| 100 | $10 + \Delta mh$ | $10 - \Delta ml$ |
| 200 | $100 + \Delta mh$ | $100 - \Delta ml$ |
| 300 | $1000 + \Delta mh$ | $1000 - \Delta ml$ |
| 400 | 0 | 0 |

## Fig.6

CYCLE T             CYCLE T

PREVIOUS RECEPTION TIME      EXPECTED RECEPTION TIME      CURRENT RECEPTION TIME      NEXT EXPECTED RECEPTION TIME

thmin      thmax      TIME

W

$-\Delta ml$    $+\Delta mh$        $-\Delta ml$

BUS LOAD FACTOR

LOWER THRESHOLD WIDTH    UPPER THRESHOLD WIDTH

DEVIATION TIME Te

TIME

texp      tact

EP 3 796 195 B1

# Fig.7

**START**

**S1** RECEIVE FRAME

**S2** COUNT THE NUMBER OF BITS OF RECEIVED FRAMES, AND RECORD SUM TOTAL OF RECEIVED BITS

**S3** IS RECEIVED FRAME CHECK TARGET? — NO → ①

YES

**S4** RECEPTION TIME = EXPECTED RECEPTION TIME? — YES → ②

NO

**S5** RECEPTION TIME > EXPECTED RECEPTION TIME? — NO →

YES

**S13** RECEPTION TIME ≧ MINIMUM THRESHOLD TIME? — NO →

**S6** CALCULATE DEVIATION TIME BETWEEN RECEPTION TIME AND EXPECTED RECEPTION TIME

**S14** RESET UPPER AND LOWER THRESHOLD WIDTHS

YES

**S7** CALCULATE BUS LOAD FACTOR

**S8** BUS LOAD FACTOR > PERMISSIBLE VALUE? — NO →

YES

**S9** CALCULATE MAXIMUM THRESHOLD TIME FROM DEVIATION TIME AND BUS LOAD FACTOR, AND UPDATE CYCLE THRESHOLD TABLE

**S10** RECEPTION TIME ≦ MAXIMUM THRESHOLD TIME? — NO →

YES

**S11** CALCULATE LOWER THRESHOLD WIDTH, AND UPDATE CYCLE THRESHOLD TABLE

**S15** RESET UPPER AND LOWER THRESHOLD WIDTHS

**S16** DETECT ATTACK

② →

**S12** DETECT NO ATTACK

① →

**END**

25

## Fig.8

EP 3 796 195 B1

## Fig.9

Figure with "TIME" axes, labels: CYCLE T, PREVIOUS RECEPTION TIME, EXPECTED RECEPTION TIME, thmin, $\Delta t$, BUS LOAD FACTOR, texp.

# Fig.10

## Fig.11

```
                    ┌─────────────┐
                    │    START    │
                    └─────────────┘
                           │
                           ▼
S31              ╱ IS EXPECTED ╲
      ┌─────────╱ RECEPTION TIME OF TARGET ╲
      │  NO     ╲    FRAME EXCEEDED ?       ╱
      │          ╲                         ╱
      │                    │ YES
      │                    ▼
      │         ┌──────────────────────────┐
      │  S32    │ CALCULATE BUS LOAD FACTOR │
      │         │ FROM SUM TOTAL OF RECEIVED│
      │         │     BITS PER UNIT TIME    │
      │         └──────────────────────────┘
      │                    │
      │                    ▼
      │  S33       ╱ BUS LOAD FACTOR > ╲
      │        ◄──╲ PERMISSIBLE VALUE ? ╱──┐ NO
      │            ╲                   ╱   │
      │                    │ YES          │
      │                    ▼              │
      │         ┌──────────────────────┐  │
      │         │ SET THRESHOLD WIDTH AND│ │
      │         │ THRESHOLD TIME BASED ON ELAPSED│
      │  S34    │ TIME DURING WHICH BUS LOAD│
      │         │ FACTOR EXCEEDS PERMISSIBLE VALUE│
      │         └──────────────────────┘  │
      │                    │              │
      │                    ▼              │
      │         ┌──────────────────────┐  │
      │  S35    │   UPDATE UPPER AND    │  │
      │         │ LOWER THRESHOLD WIDTHS│  │
      │         └──────────────────────┘  │
      │                    │          S37 │
      └────────────────────┤              ▼
                           ▼       ┌──────────────┐
      ┌──────────────────────┐     │              │
 S36  │   DETECT NO ATTACK    │     │ DETECT ATTACK│
      └──────────────────────┘     └──────────────┘
                           │              │
                           ◄──────────────┘
                           ▼
                    ┌─────────────┐
                    │     END     │
                    └─────────────┘
```

# Fig.12

START

S51 — RECEIVE CAN FRAME

S52 — RECEPTION TIME > MAXIMUM THRESHOLD TIME ?
— YES
— NO

S53 — RECEPTION TIME < MINIMUM THRESHOLD TIME ?
— YES
— NO

S54 — RESET UPPER AND LOWER THRESHOLD WIDTHS

S55 — DETECT NO ATTACK

S56 — DETECT ATTACK

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014115455 A1
- JP 2017073765 A
- WO 2016116973 A
- JP 2017050841 A